# EUROPÄISCHE PATENTSCHRIFT

(11) **EP 3 738 718 B1**
(45) Veröffentlichungstag und Bekanntmachung des Hinweises auf die Patenterteilung: **08.05.2024**
(21) Anmeldenummer: 20169986.5
(22) Anmeldetag: 16.04.2020
(51) Int. Cl.: H01F 7/02

(54) **MAGNETFUSS**
MAGNETIC FOOT
PIED MAGNÉTIQUE

(30) Priorität: 16.05.2019 DE 202019102790 U
(43) Veröffentlichungstag der Anmeldung: 18.11.2020
(73) Patentinhaber: C. & E. Fein GmbH, 73529 Schwäbisch Gmünd-Bargau (DE)
(72) Erfinder: Denzel, Sergej, 73529 Schwäbisch Gmünd-Bargau (DE); Scherrenbacher, Stefan, 73529 Schwäbisch Gmünd-Bargau (DE); Richt, Boris, 71282 Hemmingen (DE); Huaylinos Dolderer, Gabriel, 73529 Schwäbisch Gmünd-Bargau (DE)
(74) Vertreter: Wallinger Ricker Schlotter Tostmann

(56) Entgegenhaltungen:
- US-A1- 2006 012 094
- US-A1- 2016 001 439
- US-B1- 6 331 810
- US-B2- 8 568 066
- US-B2- 9 669 520

## Beschreibung

Die Erfindung betrifft einen Magnetfuß für eine Elektrowerkzeugmaschine, insbesondere für eine Magnetkernbohrmaschine, mit einem Grundkörper, in dem mindestens ein erster Permanentmagnet aufgenommen ist, wobei der mindestens eine erste Permanentmagnet mehrfach vorgesehen ist und dass die Mehrzahl der ersten Permanentmagnete in eine erste Teilgruppe und in eine zweite Teilgruppe zusammengefasst sind, die jeweils räumlich voneinander getrennt in dem Grundkörper aufgenommen sind, derart, dass die Pole der beiden Teilgruppen spiegelbildlich zueinander angeordnet sind, deren Magnetkraft mit der Magnetkraft mindestens eines zweiten Permanentmagneten zu einer resultierenden Haltekraft zusammenwirkt, wobei der mindestens eine zweite Permanentmagnet um einen Drehwinkel zwischen einer ersten Stellung, in der die resultierende Haltekraft des Magnetfußes maximiert ist, und einer zweiten Stellung, in der die resultierende Haltekraft des Magnetfußes minimiert ist, um eine Drehachse drehbar in dem Grundkörper gelagert ist sowie mit einem Verstellmittel zum Drehen des zweiten Permanentmagneten zwischen der ersten Stellung und der zweiten Stellung, wobei das Verstellmittel um einen Verdrehwinkel zwischen einer ersten Endstellung, in der sich der zweite Permanentmagnet in der ersten Stellung befindet, und einer zweiten Endstellung, in der sich der zweite Permanentmagnet in der zweiten Stellung befindet, um eine Verdrehachse verdrehbar gelagert ist. Außerdem betrifft die Erfindung eine Elektrowerkzeugmaschine. Die Erfindung ist im beigefügten Anspruchssatz beschrieben. Magnetfüße sind aus dem Stand der Technik bereits seit langem bekannt und werden häufig als Teil eines Bohrständers dafür verwendet, Bohrmaschinen und insbesondere Kernbohrmaschinen auf dem Werkstück zu befestigen, das bearbeitet werden soll. Üblicherweise werden hierfür Elektromagnete verwendet, die über die Spannungsversorgung der damit gekoppelten Elektrowerkzeugmaschine ebenfalls mit elektrischer Energie versorgt werden, was sich in der Vergangenheit auch sehr bewährt hat. Allerdings ergibt sich dabei der Nachteil, dass die magnetische Haltekraft dieser Elektromagnete im Falle einer Stromunterbrechung schlagartig nachlässt. Daraus resultiert letztlich die Gefahr, dass sich die zuvor mit dem Elektromagneten gesicherte Elektrowerkzeugmaschine von dem Werkstück lösen kann, was mit einer nicht unerheblichen Verletzungsgefahr für den Nutzer der Elektrowerkzeugmaschine verbunden ist. Diese Problematik tritt insbesondere dann auf, wenn die Elektrowerkzeugmaschine mit dem Magnetfuß an dem Werkstück über Kopf befestigt wurde. In diesem Fall ist es dann notwendig, die Elektrowerkzeugmaschine zusätzlich noch mit einem Sicherungsmittel, wie einem Gurt oder dergleichen, an dem Werkstück zu sichern.

Da aber zunehmend der Kundenwunsch besteht, sich von der Kabelgebundenheit der Elektrowerkzeugmaschinen zu lösen, werden heutzutage auch vergleichsweise große Elektrowerkzeugmaschinen, wie Magnetkernbohrmaschinen von Akkus mit elektrischer Energie gespeist. Die begrenzte Kapazität dieser Akkus macht es dann jedoch erforderlich, auf Elektromagneten zu verzichten und stattdessen schaltbare Permanentmagnete zu verwenden. Anderenfalls, wenn also auch der Magnetfuß zur Erzeugung der Haltekraft von dem Akku mit elektrischer Energie versorgt werden müsste, würde sich dies negativ auf die Nutzungsdauer der Elektrowerkzeugmaschine auswirken. Um dabei die resultierende magnetische Haltekraft variieren zu können, werden bei diesen Magnetfüßen die Orientierung von in dem Magnetfuß befindlichen Permanentmagneten und damit deren Magnetfeldlinien mechanisch verändert, indem einer oder mehrere der Permanentmagnete gegenüber dem oder den anderen Permanentmagneten gedreht werden. Hierdurch lässt sich dann die resultierende Haltekraft des Magnetfußes verändern und der Magnetfuß einschalten bzw. ausschalten.

Ein Magnetfuß der eingangs genannten Art ist beispielsweise aus der US 2016/0001440 A1 und der US 2016/0001439 A1 bekannt. Hier hat sich jedoch die Verstellung des zweiten Permanentmagneten relativ zu dem ersten Permanentmagneten als nachteilig erwiesen, da hierfür ein vergleichsweise komplexer Getriebeaufbau erforderlich ist.

US 2016/0001439 A1 offenbart den Oberbegriff des Anspruches 1. Insbesondere beim Verwenden von Magnetkernbohrmaschinen in räumlich begrenzten Verhältnissen, wie beispielsweise einem I-Träger, der auch als Doppel-T-Träger bezeichnet wird, hat es sich zudem als nachteilig erwiesen, dass die Verstellung des zweiten Permanentmagneten, der zum Ein- und Ausschalten des Magnetfußes üblicherweise um 180° gedreht werden muss, um so dessen Polarität umzukehren, mit dem Verstellmittel nur sehr schwer erfolgen kann, da hier die Platzverhältnisse so begrenzt sind, dass das Verstellmittel vom Nutzer nur schwer ergriffen und verdreht werden kann.

Der vorliegenden Erfindung liegt daher die Aufgabe zugrunde, einen Magnetfuß bereitzustellen, der die oben genannten Nachteile reduziert und insbesondere eine Betätigung des Magnetfußes auch in räumlich schwer zugänglicher Umgebung erleichtert. Außerdem ist es Aufgabe der Erfindung, eine verbesserte Elektrowerkzeugmaschine bereitzustellen, die sich insbesondere in beengten Platzverhältnissen bedienen lässt.

Diese Aufgabe wird gemäß der Erfindung bei einem Magnetfuß der eingangs genannten Art durch die Merkmale des Anspruchs 1 gelöst. Also unter anderem dadurch, dass zwischen dem Verstellmittel und dem zweiten Permanentmagneten ein Getriebe vorgesehen ist, dass derartig ausgelegt ist, dass das Verhältnis zwischen dem Verdrehwinkel des Verstellmittels und dem Drehwinkel des zweiten Permanentmagneten zwischen 1:3,6 und 1:1,5 und besonders bevorzugt bei 1:2,4 liegt.

Will also der Nutzer die resultierende Haltekraft des Magnetfußes maximieren, so muss dieser das Verstellmittel deutlich weniger weit verdrehen, um den zweiten Permanentmagneten aus der ersten Stellung in die zweite Stellung zu drehen. Insbesondere wenn die Platzverhältnisse beengt sind, ist es dem Nutzer hierdurch möglich, den zweiten Permanentmagneten zu drehen, ohne das Verstellmittel unnötigerweise weit verdrehen zu müssen.

In diesem Zusammenhang hat es sich auch bewährt, wenn der Verdrehwinkel zwischen der ersten Endstellung und der zweiten Endstellung zwischen 50° und 120° liegt und besonders bevorzugt 70° beträgt. Hierbei muss darauf geachtet werden, einen Kompromiss zwischen der aufzubringenden Kraft und dem Verstellweg zu finden. Wird der Verdrehwinkel des Verstellmittels zwischen den beiden Endstellungen zu klein, so steigt dadurch die vom Nutzer aufzubringende Kraft deutlich an. Wird der Verdrehwinkel auf der anderen Seite zu groß gewählt, so sinkt zwar die aufzubringende Kraft, der Nutzer kann dann - insbesondere bei beengten Platzverhältnissen - das Verstellmittel aber nur schwer zwischen den beiden Endstellungen verstellen. Insbesondere die Verstellung des zweiten Permanentmagneten aus der zweiten Stellung in die erste Stellung erfordert vergleichsweise viel Kraft, da hier die sich abstoßenden Magnetkräfte überwunden werden müssen.

Um eine gleichmäßige Verstellung des zweiten Permanentmagneten zu gewährleisten, hat es sich bewährt, wenn das Getriebe eine Getriebeverzahnung aufweist, deren Übersetzungsverhältnis konstant ist. Zudem ist dies aus fertigungstechnischen Gründen bevorzugt, da sich eine konstante Verzahnung einfacher herstellen lässt. In diesem Zusammenhang hat es sich als besonders vorteilhaft erwiesen, wenn die Getriebeverzahnung aus einem ersten Verzahnungsträger und aus einem zweiten Verzahnungsträger gebildet ist. Durch die beiden Verzahnungsträger lässt sich das Getriebe besonders einfach realisieren.

Bewährt hat es sich dabei insbesondere, wenn der erste Verzahnungsträger, der drehfest mit dem Verstellmittel verbunden ist, als ein Kreissegment gebildet ist, dessen Winkel im Wesentlichen dem Winkel zwischen der ersten Endstellung und der zweiten Endstellung des Verstellmittels entspricht. Hierdurch lässt sich insbesondere ein äußerst kompaktes Getriebe realisieren, was sich positiv auf die Größe des erfindungsgemäßen Magnetfußes auswirkt.

Als günstig hat es sich außerdem auch gezeigt, wenn der zweite Verzahnungsträger kreisförmig gebildet ist, wodurch sich die Herstellungskosten des Magnetfußes weiter reduzieren lassen.

Die Kraftübertragung von dem Verstellmittel auf den zweiten Permanentmagneten lässt sich insbesondere dadurch erleichtern, wenn die Anzahl der Zähne des zweiten Verzahnungsträgers zwischen 4 und 8 liegt und besonders bevorzugt 5 beträgt.

Als günstig hat es sich zudem erwiesen, wenn zwischen dem Getriebe und dem Grundkörper ein den zweiten Permanentmagnet in die erste Stellung vorspannendes Federelement angeordnet ist. Hierdurch wird letztlich die Verstellung des zweiten Permanentmagneten aus der zweiten Stellung, in der die resultierende Haltekraft des Magnetfußes minimal ist, in die erste Stellung, in der die resultierende Haltekraft des Magnetfußes maximal ist, unterstützt. Der Nutzer des erfindungsgemäßen Magnetfußes muss damit weniger Kraft aufbringen, um die resultierende Haltekraft zu erhöhen und den Magnetfuß einzuschalten, was sich letztlich positiv auf die Bedienerfreundlichkeit auswirkt. In diesem Zusammenhang hat es sich auch als vorteilhaft gezeigt, wenn das Federelement als eine Torsionsfeder gebildet ist. Das Federelement kann dabei mit einem ersten Ende unmittelbar an dem Grundkörper befestigt werden und mit einem zweiten Ende an dem Verstellmittel und/oder an dem Getriebe. Bei der Verstellung des zweiten Permanentmagneten aus der ersten Stellung in die zweite Stellung wird das Federelement dabei gespannt.

Auf die Betriebssicherheit wirkt es sich zudem günstig aus, wenn an dem Grundkörper Anschläge ausgebildet sind, die die Verdrehung des Verstellmittels begrenzen. Somit kann der Nutzer das Verstellmittel ergreifen und einfach zwischen den beiden Endstellungen verdrehen, ohne dass er darauf achten müsste, dass die Verstellung nicht über die Endstellungen hinausgeht. Hierdurch wird also letztlich die Zuverlässigkeit der Bedienung des Magnetfußes erhöht.

Als günstig hat es sich auch erwiesen, wenn die Anschläge unmittelbar die Verstellung des Getriebes begrenzen. In diesem Zusammenhang hat es sich dann auch als vorteilhaft gezeigt, wenn die Anschläge im Inneren des Grundkörpers ausgebildet sind und die Verstellung des ersten Verzahnungsträgers begrenzen. Da das Getriebe in dem Grundkörper aufgenommen ist, wird hierdurch erreicht, dass die Begrenzung der Verstellung in einem von der Umgebung geschützten Bereich vorgenommen werden kann. Im Rahmen der Erfindung ist es jedoch auch vorgesehen, die Verstellung des zweiten Verzahnungsträgers zu begrenzen oder die Anschläge außerhalb des Grundkörpers auszubilden.

Bewährt hat es sich zudem auch, wenn die Lage des Verstellmittels in der ersten Endstellung und/oder in der zweiten Endstellung durch eine Rastverbindung zwischen dem Grundkörper und dem Verstellmittel festgelegt ist. Hierdurch lässt sich das Verstellmittel also in der entsprechenden Position sichern, wodurch die Gefahr reduziert wird, dass sich die Haltekraft des Magnetfußes unbeabsichtigt ändert.

In diesem Zusammenhang hat es sich auch besonders bewährt, wenn in dem Grundkörper mindestens ein erster Rastsitz ausgebildet ist, der die erste Endstellung des Verstellmittels definiert. Für die Lagesicherung des Verstellmittels in dem Rastsitz hat es sich dann als günstig gezeigt, wenn an dem Verstellmittel eine korrespondierende Rastnase ausgebildet ist, die mindestens eine Führungsfase aufweist. Die Rastnase kann dabei in den Rastsitz einrücken und die Führungsfase erleichtert es dem Nutzer, das Verstellmittel in den Rastsitzt einzuschwenken. Das Prinzip der Führungsfase ist dabei der Fase entlehnt, die an einem Schloss ausgebildet ist und es erleichtert, dass die Türe ins Schloss fällt.

Als besonders vorteilhaft hat es sich auch erwiesen, wenn das Verstellmittel als ein Verstellhebel gebildet ist. Dieser kann besonders einfach vom Nutzer ergriffen werden, um den zweiten Permanentmagnet zwischen der ersten Stellung und der zweiten Stellung zu verstellen. Im Rahmen der Erfindung ist es jedoch auch vorgesehen, dass das Verstellmittel als ein Drehknopf ausgebildet ist.

Als günstig hat es sich auch gezeigt, wenn der Verstellhebel gegen die Kraft eines Rückstellelements um eine Kippachse verschwenkbar ist, die senkrecht zu dessen Verdrehachse orientiert ist. Insbesondere wenn die Lage des Verstellhebels durch den entsprechenden Rastsitz festgelegt ist, ist es für den Nutzer somit möglich, den Verstellhebel durch das Verschwenken um die Kippachse aus dem entsprechenden Rastsitz auszuschwenken und in die nächste Position zu überführen. Zudem wird hierdurch auch erreicht, dass der Nutzer das Verstellmittel letztlich blind bedienen kann, also ohne genau hinschauen zu müssen. Insbesondere kann der Nutzer das Verstellmittel auch von der Seite her ergreifen und verstellen, die von dem Verstellmittel abgewandt ist. Dies hat insbesondere bei schwer zugänglichen Werkstücken, wie beispielsweise I-Trägern, einen deutlichen Vorteil.

Als vorteilhaft hat es sich auch erwiesen, wenn zwischen der ersten Endstellung und der zweiten Endstellung ein zweiter Rastsitz ausgebildet ist, der eine Zwischenstellung definiert, in der die resultierende Haltekraft zwischen der minimalen Haltekraft und der maximalen Haltekraft liegt. Hierdurch wird letztlich eine Position definiert, in der es dem Nutzer möglich ist, den Magnetfuß auf das Werkstück aufzusetzen und dieses bereits leicht zu fixieren. Die Haltkraft darf dabei jedoch nur so ausgelegt sein, dass dem Nutzer ein Verschieben der Elektrowerkzeugmaschine noch möglich ist, um dessen finale Position festzulegen.

Der Komfort des Nutzers der erfindungsgemäßen Elektrowerkzeugmaschine wird auch noch dadurch weiter erhöht, wenn auf der dem Verstellmittel abgewandten Stirnseite des Grundkörpers eine Kraftanzeige angeordnet ist, die ein Ablesen der resultierenden Haltekraft ermöglicht. Somit kann der Nutzer die resultierende Haltekraft einfach ablesen und zwar ohne einen Blick auf die Position des Verstellmittels werfen zu müssen. Dies ist insbesondere bei beengten Platzverhältnissen von Vorteil, wenn der Nutzer das Verstellmittel nur von der diesem abgewandten Seite her ergreifen kann.

In diesem Zusammenhang hat es sich besonders bewährt, wenn die Kraftanzeige drehfest mit der Drehachse des zweiten Permanentmagneten verbunden ist. Wird also der zweite Permanentmagnet durch das Verstellmittel zwischen der ersten Stellung und der zweiten Stellung verstellt, so geht dies einher mit einer Veränderung der Kraftanzeige, die in einer besonders bevorzugten Ausführungsform als ein Pfeil realisiert ist, der insbesondere zusammen mit einer auf dem Grundkörper abgedruckten Skala ein Ablesen der Position des zweiten Permanentmagneten und damit der Stärke der resultierenden Haltekraft ermöglicht.

Als vorteilhaft hat es sich auch gezeigt, wenn der zweite Permanentmagnet eingebettet ist in eine im Wesentlichen zylindrische Ummantelung, die in dem Grundkörper drehbar aufgenommen ist. Hierdurch wird insbesondere die Montage des erfindungsgemäßen Magnetfußes und die Lagerung des zweiten Permanentmagneten innerhalb des Grundkörpers deutlich vereinfacht.

Außerdem hat es sich als günstig gezeigt, wenn dem zweiten Permanentmagneten ein Schaltelement zugeordnet ist zum Schalten eines mit dem Magnetfuß verbindbaren Schalters. Hierdurch lässt sich auf einfache Art und Weise erreichen, dass ein Einschalten einer mit dem erfindungsgemäßen Magnetfuß verbundenen Elektrowerkzeugmaschine nur dann möglich ist, wenn sich der zweite Permanentmagnet in der ersten Stellung befindet, wenn also die resultierende Haltekraft maximiert ist.

Als besonders vorteilhaft hat es sich in diesem Zusammenhang auch erwiesen, wenn das Schaltelement als eine in der Ummantelung eingebettete Schaltkugel gebildet ist. Die Schaltkugel kann dabei insbesondere auch integral in die Ummantelung eingearbeitet werden, beispielsweise mittels eines materialtragenden Verfahrens, bei dem die Ummantelung lokal abgetragen wird. Denkbar ist aber auch eine lokale Vergrößerung des Außenumfangs der Ummantelung.

Gemäß der Erfindung ist der mindestens eine erste Permanentmagnet mehrfach vorgesehen und die Mehrzahl der
ersten Permanentmagnete sind in eine erste Teilgruppe und in eine zweite Teilgruppe zusammengefasst, die jeweils räumlich voneinander getrennt in dem Grundkörper aufgenommen sind. Hierdurch wird insbesondere die resultierende maximale Haltekraft positiv beeinflusst.

Als vorteilhaft hat es sich auch gezeigt, wenn ein federndes Druckstück in dem Grundkörper aufgenommen ist, das in der ersten Endstellung des Verstellmittels und/oder die zweite Endstellung in eine am Getriebe ausgebildete Aussparung einrückbar ist. Hierdurch wird dem Nutzer des erfindungsgemäßen Magnetfußes ein taktiles oder auch akustisches Feedback gegeben, wenn die erste Endstellung und/oder die zweite Endstellung des Verstellmittels erreicht wird.

Die die Elektrowerkzeugmaschine betreffende Aufgabe wird gelöst durch eine Elektrowerkzeugmaschine, insbesondere durch eine Magnetkernbohrmaschine, mit einem Magnetfuß nach einem der Ansprüche 1 bis 12.

Im Folgenden wird die Erfindung an einem in den Zeichnungen dargestellten Ausführungsbeispiel näher erläutert; es zeigen:
- Fig. 1: eine Explosionsansicht eines Magnetfußes,
- Fig. 2: eine Schnittansicht entlang des Schnittes II-II aus der Figur 4 durch den Magnetfuß mit maximaler resultierender Haltekraft,
- Fig. 3: eine Schnittansicht entlang des Schnittes II-II durch den Magnetfuß mit minimaler resultierender Haltekraft,
- Fig. 4: einen Längsschnitt durch den Magnetfuß,
- Fig. 5: eine Detailansicht auf ein Getriebe des Magnetfußes,
- Fig. 6: eine perspektivische Ansicht des Magnetfußes mit maximaler resultierender Haltekraft,
- Fig. 7: eine perspektivische Ansicht des Magnetfußes mit minimaler resultierender Haltekraft,
- Fig. 8: einen Querschnitt durch den Magnetfuß entlang des Schnittes VIII-VIII aus der Figur 4,
- Fig. 9: einen weiteren Querschnitt durch den Magnetfuß entlang des Schnittes IX-IX aus der Figur 4,
- Fig. 10: eine Detailansicht auf einen Teil eines Verstellmittels des Magnetfußes,
- Fig. 11: eine Detailansicht auf einen ersten Teil des Getriebes, und
- Fig. 12: eine Detailansicht auf einen zweiten Teil des Getriebes.

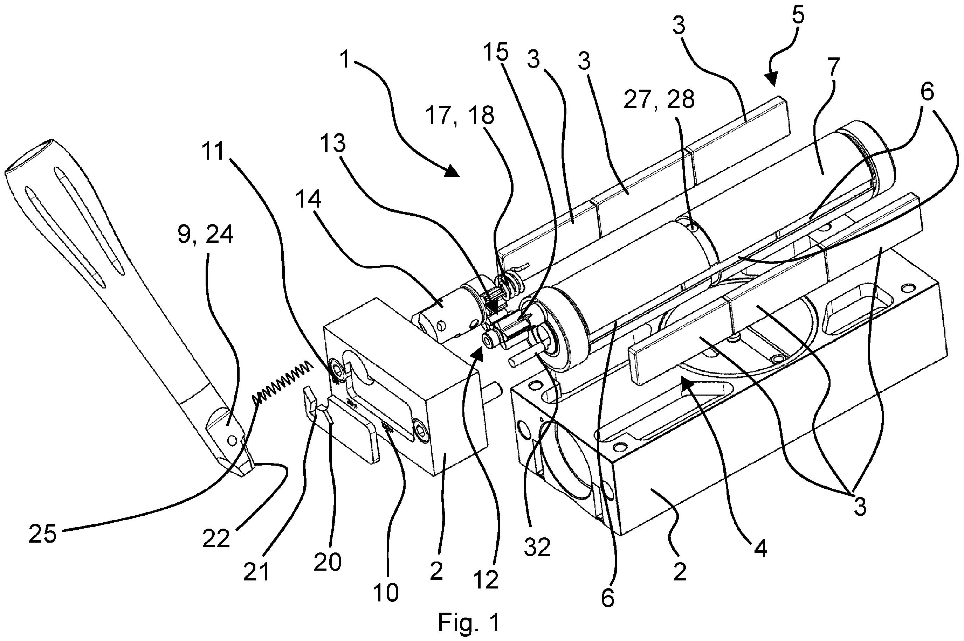

Figur 1 zeigt in einer Explosionsansicht einen Magnetfuß 1 für eine Elektrowerkzeugmaschine, insbesondere für eine Magnetkernbohrmaschine. Der Magnetfuß 1 weist dabei einen Grundkörper 2 auf, in dem mehrere erste Permanentmagnete 3 aufgenommen sind. Die ersten Permanentmagnete 3 sind in einer ersten Teilgruppe 4 und in einer zweiten Teilgruppe 5 zusammengefasst, die jeweils räumlich voneinander getrennt in dem Grundkörper 2 aufgenommen sind. Die Magnetkraft der ersten Permanentmagnete 3 überlagert sich mit der Magnetkraft von zweiten Permanentmagneten 6 zu einer resultierenden Haltekraft. Die zweiten Permanentmagnete 6 sind dabei in eine im Wesentlichen zylindrische Ummantelung 7 eingebettet, die in dem Grundkörper 2 drehbar gelagert aufgenommen ist. Um die Haltkraft des Magnetfußes 1 variieren zu können, sind die zweiten Permanentmagnete 6 um einen Drehwinkel α zwischen einer ersten Stellung, in der die resultierende Haltekraft des Magnetfußes 1 maximiert ist, und einer zweiten Stellung, in der die resultierende Haltekraft des Magnetfußes 1 minimiert ist, um eine Drehachse 8 drehbar in dem Grundkörper 2 gelagert. Das Drehen der zweiten Permanentmagnete 6 erfolgt dabei durch ein Verstellmittel 9. Dieses ist um einen Verdrehwinkel β zwischen einer ersten Endstellung 10, in der sich die zweiten Permanentmagnete 6 in der ersten Stellung befinden, und einer zweiten Endstellung 11, in der sich die zweiten Permanentmagnete 6 in der zweiten Stellung befinden, um eine Verdrehachse 16 verdrehbar gelagert. Zwischen dem Verstellmittel 9 und den zweiten Permanentmagneten 6 ist ein Getriebe 12 vorgesehen, das derartig ausgelegt ist, dass das Verhältnis zwischen dem Verdrehwinkel β des Verstellmittels 9 und dem Drehwinkel α der zweiten Permanentmagnete 6 zwischen 1:3,6 und 1:1,5 und besonders bevorzugt bei 1:2,4 liegt. Dies bedeutet, dass der Verdrehwinkel β des Verstellmittels 9 zwischen der ersten Endstellung 10 und der zweiten Endstellung 11 zwischen 50° und 120° liegt und besonders bevorzugt 70° beträgt, während die zweiten Permanentmagnete 6 um 180° gedreht werden.

Das Getriebe 12, das in dem Magnetfuß 1 aufgenommen ist, weist eine Getriebeverzahnung 13 auf, deren Übersetzungsverhältnis konstant ist. Die Getriebeverzahnung 13 ist dabei aus einem ersten Verzahnungsträger 14 und aus einem zweiten Verzahnungsträger 15 gebildet, wobei der erste Verzahnungsträger 14 drehfest mit der Verdrehachse 16 des Verstellmittels 9 verbunden ist. Während der zweite Verzahnungsträger 15 kreisförmig gebildet ist, ist der erste Verzahnungsträger 14, um eine möglichst kompakte Bauform erreichen zu können, als ein Kreissegment gebildet, dessen Winkel im Wesentlichen dem Verdrehwinkel β des Verstellmittels 9 entspricht. In dem gezeigten Ausführungsbeispiel weist der zweite Verzahnungsträger 15 insgesamt 5 Zähne auf. Um die Verstellung der zweiten Permanentmagnete 6, die in dem Grundkörper 2 drehbar aufgenommen sind, aus der zweiten Stellung in die erste Stellung zu erleichtern, ist zwischen dem Getriebe 12 und dem Grundkörper 2 ein Federelement 17 angeordnet, das als eine Torsionsfeder 18 gebildet ist, um den zweiten Permanentmagnet 6 in die erste Stellung vorzuspannen. Um das Verdrehen des Verstellmittels 9 zu begrenzen, sind dem Grundkörper 2 Anschläge 19 zugeordnet, die im Inneren des Grundkörpers 2 ausgebildet sind und die Verstellung des ersten Verzahnungsträgers 14 begrenzen.

Die Lage des Verstellmittels 9 lässt sich in der ersten Endstellung 10 und/oder in der zweiten Endstellung 11 durch eine Rastverbindung zwischen dem Grundkörper 2 und dem Verstellmittel 9 sichern. Hierzu ist an dem Grundkörper 2 ein erster Rastsitz 20 ausgebildet, der die erste Endstellung 10 des Verstellmittels 9 definiert. Zudem ist in dem gezeigten Ausführungsbeispiel zwischen der ersten Endstellung 10 und der zweiten Endstellung 11 noch ein zweiter Rastsitz 21 ausgebildet, der eine Zwischenstellung definiert, in der die resultierende Haltekraft zwischen der maximalen Haltekraft und der minimalen Haltekraft liegt. In diese Rastsitze 20, 21 kann dabei eine Rastnase 22 eingreifen, die an dem Verstellmittel 9 ausgebildet ist. An der Rastnase 22 ist zudem eine Führungsfase 23 ausgebildet, die ein Einrücken der Rastnase 22 in die Rastsitze 20, 21 erleichtert, ähnlich einer ins Schloss fallenden Tür.

In dem gezeigten Ausführungsbeispiel ist das Verstellmittel 9 als ein Verstellhebel 24 gebildet, der gegen die Kraft eines Rückstellelements 25 um eine Kippachse 26 verschwenkbar ist, die senkrecht zu dessen Verdrehachse 16 orientiert ist.

Der Figur 1 ist weiterhin zu entnehmen, dass dem zweiten Permanentmagneten 6 ein Schaltelement 27 zugeordnet ist, das in dem gezeigten Ausführungsbeispiel als eine in der Ummantelung 7 eingebettete Schaltkugel 28 ausgebildet ist. Dieses dient zum Schalten eines mit dem Magnetfuß 1 verbindbaren Schalters einer Elektrowerkzeugmaschine, wie nachstehend noch näher erläutert werden wird.

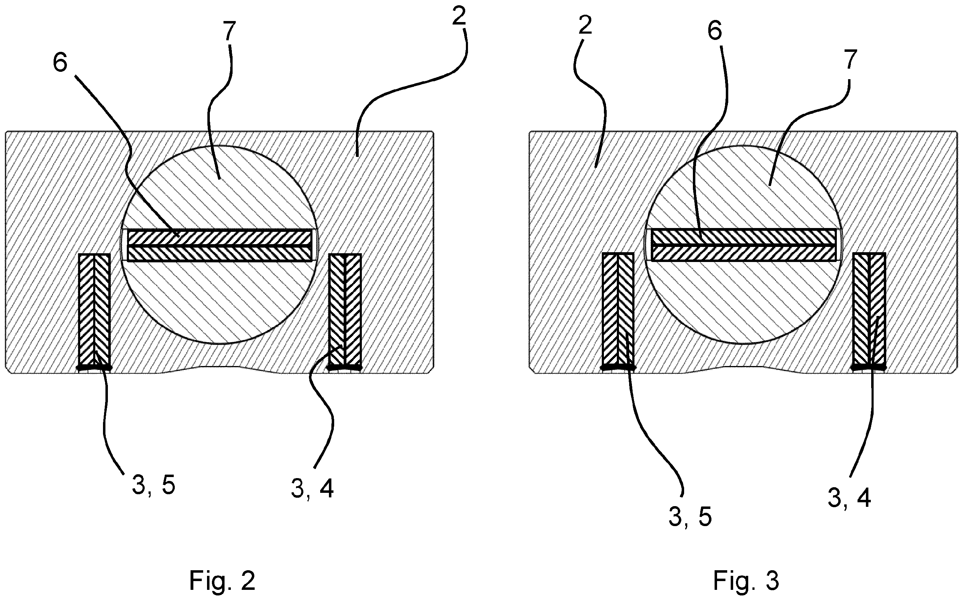

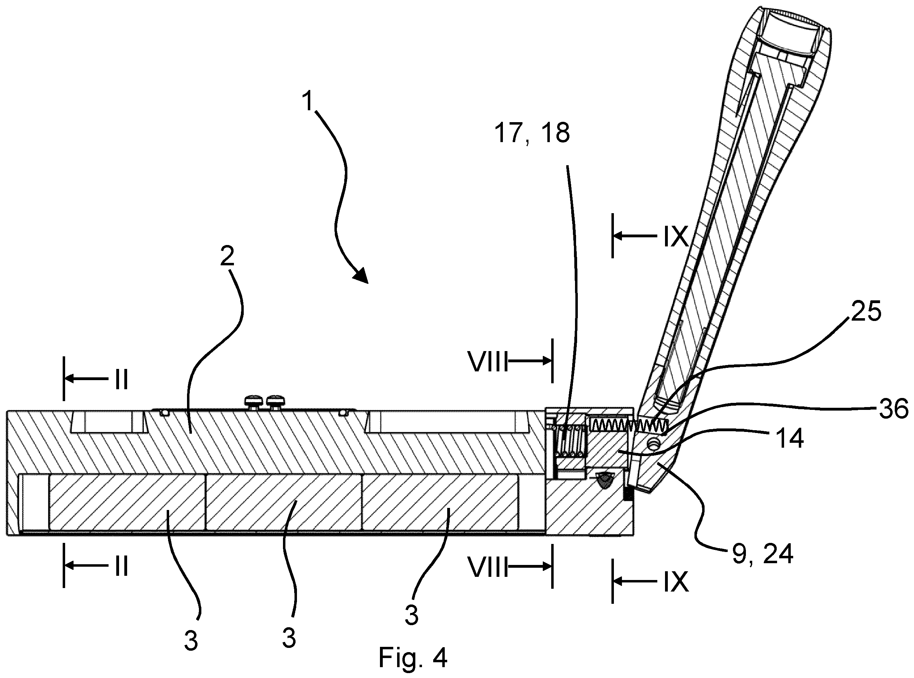

Die in der Figur 2 dargestellte Schnittansicht durch den Schnitt II-II aus der Figur 4 zeigt die zweiten Permanentmagnete 6 in der ersten Stellung, in der die resultierende Haltekraft maximal ist. Hierbei sind die Pole der beiden Teilgruppen 4, 5 der ersten Permanentmagnete 3 spiegelbildlich zueinander orientiert, so dass in dem gezeigten Ausführungsbeispiel die Nordpole jeweils aufeinander zu weisen. Der Nordpol des zweiten Permanentmagnet 6 weist dabei auf die Nordpole der ersten Permanentmagnete 3 zu, so dass sich diese abstoßen und in dem Werkstück ein entsprechendes Gegenfeld erzeugen. Wird nun der zweite Permanentmagnet 6 um 180° gedreht, wie in der Figur 3 dargestellt ist, so ziehen sich die ersten Permanentmagnete 3 und die zweiten Permanentmagnete 6 gegenseitig an und die resultierende Haltekraft wird minimiert.

In der Figur 4 ist ein Längsschnitt durch den Magnetfuß 1 dargestellt. Aus diesem geht insbesondere die Positionierung der ersten Permanentmagnete 3 in dem Grundkörper 2 hervor.

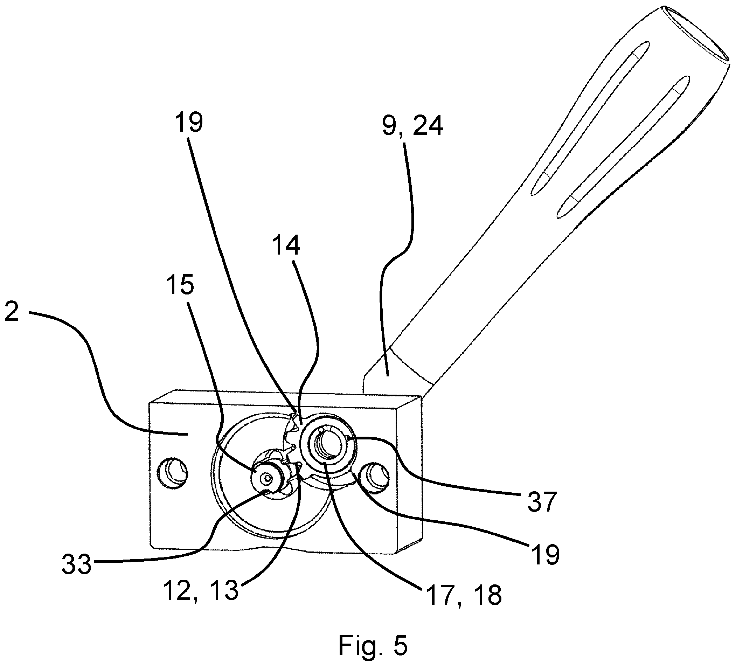

Figur 5 zeigt noch einmal eine Detailansicht auf das Getriebe 12, das in dem Grundkörper 2 aufgenommen ist, der zu diesem Zweck mehrteilig gebildet ist. Die einzelnen Teile werden dabei durch eine Schraubverbindung miteinander verschraubt.

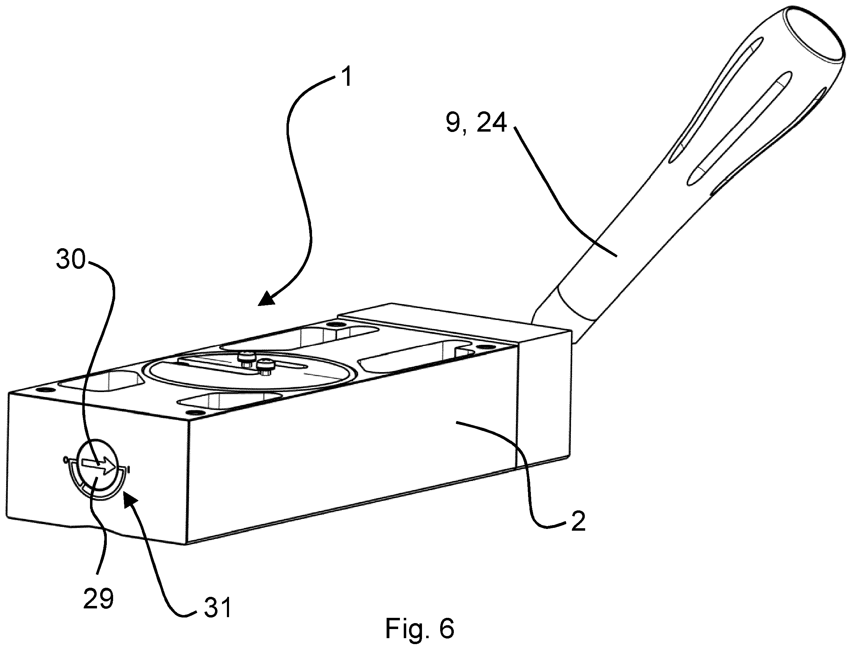

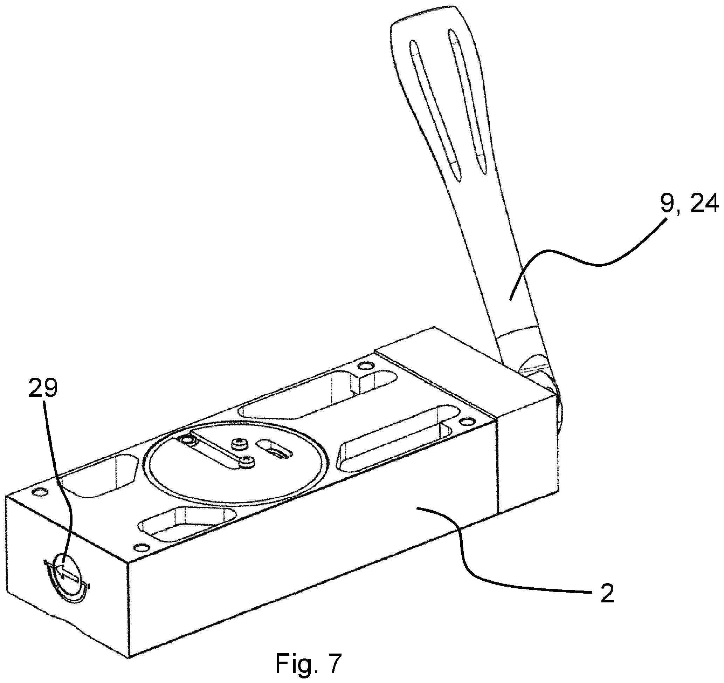

Aus der in der Figur 6 dargestellten perspektivischen Ansicht des Magnetfußes 1, bei dem die Haltekraft maximiert ist, wird deutlich, dass auf der dem Verstellmittel 9 abgewandten Stirnseite des Grundkörpers 2 eine Kraftanzeige 29 angeordnet ist, die ein Ablesen der resultierenden Haltekraft ermöglicht. Diese ist durch einen Pfeil 30 und eine auf dem Grundkörper 2 abgebildete Markierung 31 gebildet, wobei die Kraftanzeige 29 koaxial und drehfest mit der Drehachse 8 des zweiten Permanentmagneten 6 ausgebildet ist. Wird also der zweite Permanentmagnet 6 verstellt, so ist dies für den Nutzer durch den sich bewegenden Pfeil 30 sehr deutlich zu erkennen. Dies ermöglicht es dem Nutzer, den Magnetfuß 1 letztlich blind zu verstellen, also ohne auf die Position des Verstellhebels 24 achten zu müssen. Dies wird dabei insbesondere auch durch das Einrasten der Rastnase 22 in den Rastsitzen 20, 21 erleichtert. Der in der Figur 7 dargestellten Ansicht des Magnetfußes 1 mit minimierter resultierender Haltekraft ist zu entnehmen, dass auch dieser Zustand auf der Kraftanzeige 29 angezeigt wird. Darüber hinaus ist aus einem Vergleich zwischen der Figur 6 und der Figur 7 zu erkennen, dass der Verstellhebel 24 lediglich um in etwa 70° verdreht wurde, während der Pfeil 30 der Kraftanzeige 29 und damit auch der zweite Permanentmagnet 6 um 180° gedreht wurde.

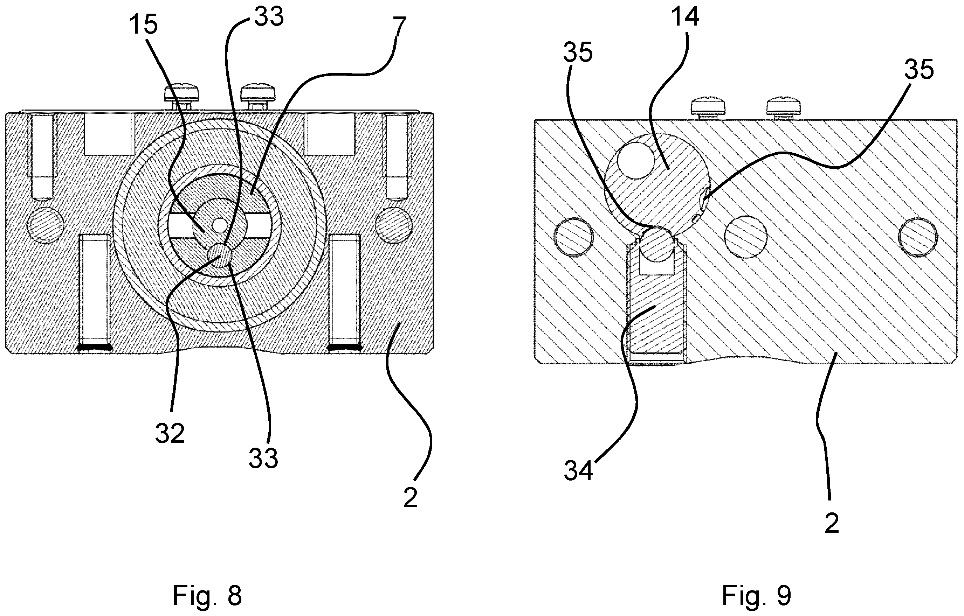

Figur 8 zeigt in einem Querschnitt entlang des Schnittes VIII-VIII aus der Figur 4 die Verbindung zwischen dem zweiten Verzahnungsträger 15 und der Ummantelung 7 der zweiten Permanentmagnete 6. Dies erfolgt hierbei über einen Verbindungsstift 32, der jeweils in eine an dem zweiten Verzahnungsträger 15 und der Ummantelung 7 ausgebildeten Ausnehmung 33 eingreift, um somit den zweiten Verzahnungsträger 15 drehfest mit der Ummantelung 7 zu verbinden.

Figur 9 zeigt den Schnitt IX-IX aus der Figur 4. Aus dieser Schnittansicht ist zu erkennen, dass an dem ersten Verzahnungsträger 14 ein federndes Druckstück 34 in entsprechende Aussparungen 35 eingreift, die den Endstellungen 10, 11 des Verstellmittels 9 entsprechen, wodurch dem Nutzer beim Verstellen des Verstellmittels 9 eine taktile Rückmeldung beim Erreichen der Endstellungen 10, 11 geben wird, was die Verstellung noch weiter erleichtert.

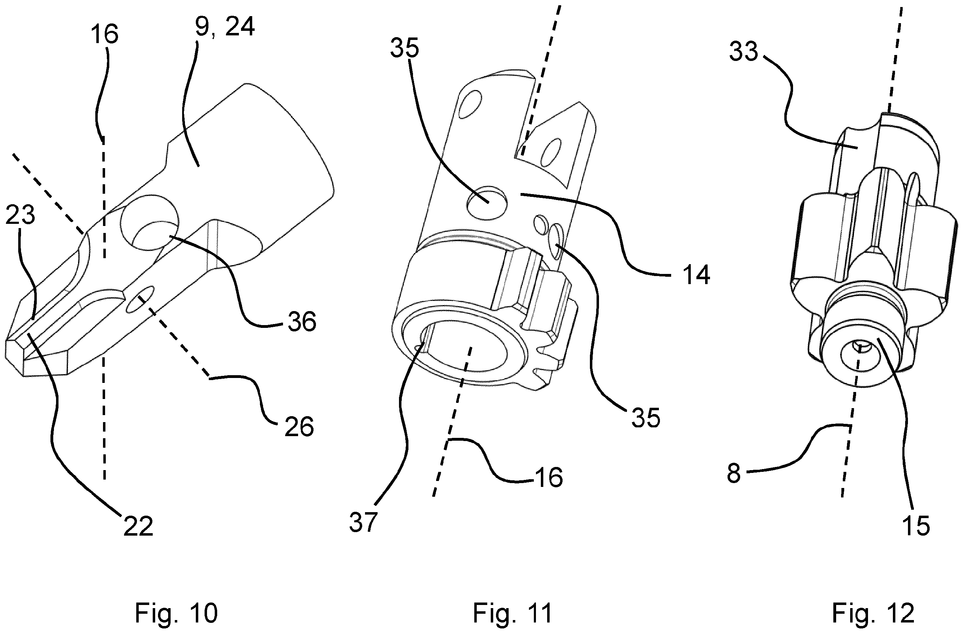

Eine Detailansicht auf einen Teil des Verstellmittels 9 des Magnetfußes 1 zeigt Figur 10. hierbei handelt es sich um einen Teil des Verstellhebels 24. Hieraus ist insbesondere die Rastnase 22 zu erkennen, die auf der einen Seite die Führungsfase 23 aufweist, wodurch die Rastnase 22 erleichtert in den Rastsitz 20, 21 eingreifen kann, vergleichbar mit einer ins Schloss fallenden Tür. Außerdem ist in dem dargestellten Detail auch eine Federaufnahme 36 zu erkennen, in die das Rückstellelement 25 eingesetzt werden kann, gegen dessen Kraft es möglich ist, das Verstellmittel 9 um die ebenfalls in der Figur 10 zur erkennenden Kippachse 26 zu verschwenken, die senkrecht zu der Verdrehachse 16 orientiert ist.

Die Figur 11 zeigt ebenfalls in einer Detailansicht den ersten Verzahnungsträger 14 des Getriebes 12. Hierbei ist zu erkennen, dass die Verzahnung lediglich auf einem Kreissegment ausgebildet ist, das in dem gezeigten Ausführungsbeispiel rund 70° umfasst. Der Verstellhebel 24 ist dabei an dem ersten Verzahnungsträger 14 schwenkbar gelagert, mit diesem aber um die Verdrehachse 16 drehfest verbunden. An dem ersten Verzahnungsträger 14 ist zudem auch zu erkennen, dass hierbei eine Aufnahme 37 für einen Schenkel des als Torsionsfeder 18 gebildeten Federelements 17 ausgebildet ist.

Der zweite Verzahnungsträger 15, der in der Figur 12 dargestellt ist, weist insgesamt 5 Zähne auf. Darüber hinaus ist zu erkennen, dass der zweite Verzahnungsträger 15 einenends die Ausnehmung 33 aufweist, in die der Verbindungsstift 32 eingesetzt werden kann, um den zweiten Verzahnungsträger 15 mit der Ummantelung 7 des zweiten Permanentmagneten 6 drehfest zu koppeln.

Im Folgenden wird noch einmal die Bedienung des Magnetfußes 1 erläutert. Ausgehend von der in der Figur 7 dargestellten Situation, in der die resultierende Haltekraft minimiert ist, kann der Nutzer den Verstellhebel 24 ergreifen und dessen Ende, an dem der Handgriff ausgebildet ist, um die Verdrehachse 16 verdrehen. Bei dieser Verstellung werden durch das Getriebe 12 die zweiten Permanentmagnete 6 gegenüber den ersten Permanentmagneten 3 gedreht, wodurch sich die resultierende Haltekraft des Magnetfußes 1 zunehmend erhöht. Diese Verstellung muss gegen die abstoßenden Kräfte zwischen den zweiten Permanentmagneten 6 und den ersten Permanentmagneten 3 durchgeführt werden, was durch die Torsionsfeder 18 unterstützt wird. Wenn der Verstellhebel 24 dabei den zweiten Rastsitz 21 erreicht, so wird der Verstellhebel 24 durch das Rückstellelement 25 in den zweiten Rastsitz 21 verschwenkt, was durch die Führungsfase 23 noch weiter begünstigt wird. In diesem zweiten Rastsitz 21 befindet sich der Magnetfuß 1 in einer Zwischenstellung, in der die resultierende Haltekraft bereits ausreicht, den Magnetfuß 1 und die mit diesem verbundene Elektrowerkzeugmaschine auf dem zu bearbeitenden Werkstück zu halten. Allerdings ist in dieser Position die resultierende Haltekraft noch so gering, dass es dem Nutzer möglich ist, den Magnetfuß 1 noch zu verschieben und auf dem Werkstück zu positionieren. Soll ausgehend von dieser Zwischenposition die Haltekraft weiter erhöht werden, so muss der Nutzer den Verstellhebel 24 ergreifen und zunächst gegen das Rückstellelement 25 aus dem zweiten Rastsitz 21 herausschwenken, der die Zwischenstellung definiert. Wenn dies erfolgt ist, was durch die Führungsfase 23 noch begünstigt wird, kann der Nutzer den Verstellhebel 24 - wiederum unterstützt durch die Torsionsfeder 18 - in die erste Endstellung 10 verdrehen, wo dieser dann in den ersten Rastsitz 20 eingreift. Dabei wird der zweite Permanentmagnet 6 in die erste Stellung gedreht und die resultierende Haltekraft wird maximal. In dieser Position ist dann der Magnetfuß 1 fest auf dem zu bearbeitenden Material gesichert. Die Verstellung des Verstellhebels 24 kann dabei insbesondere auch von der dem Verstellhebel 24 abgewandten Seite her erfolgen, da durch die Kraftanzeige 29 dem Nutzer die resultierende Haltekraft angezeigt wird. Auch ist ein derartiges Ergreifen, Verschwenken und Verdrehen des Verstellhebels 24 von der dem Verstellhebel 24 abgewandten Seite her aus ergonomischen Aspekten positiv zu bewerten.

In der ersten Stellung der zweiten Permanentmagnete 6 befindet sich die in der Ummantelung 7 ausgebildete Schaltkugel 28 auf der von dem zu bearbeitenden Werkstück abgewandten Oberseite des Grundkörpers 2 und tritt durch diesen hinaus. Hierdurch ist es beispielsweise möglich, einen Schalter einer mit dem Magnetfuß 1 verbundenen Elektrowerkzeugmaschine einzuschalten. Dies hat insbesondere den Vorteil, dass beispielsweise die Elektrowerkzeugmaschine erst dann vom Nutzer eingeschaltet werden kann, wenn sich der Magnetfuß 1 in der Position befindet, in der die resultierende Haltekraft maximiert ist. Was sich dadurch eben auch positiv auf die Betriebssicherheit auswirkt.

Wenn der Nutzer den Magnetfuß 1 nun wieder von dem Werkstück lösen möchte, so muss er lediglich den Verstellhebel 24 aus dem ersten Rastsitz 20 ausrücken, indem er diesen gegen die Kraft des Rückstellelements 25 verschwenkt und dann um die Verdrehachse 16 verdreht. Wird der zweite Permanentmagnet 6 um die Drehachse 8 gedreht, so wird hierdurch die auf der Ummantelung 7 ausgebildete Schaltkugel 28 ebenfalls verdreht, was dann zu einem Ausschalten eines Schalters einer mit dem Magnetfuß 1 verbunden Elektrowerkzeugmaschine führt.

### Bezugszeichenliste

- 1: Magnetfuß
- 2: Grundkörper
- 3: erster Permanentmagnet
- 4: erste Teilgruppe
- 5: zweite Teilgruppe
- 6: zweiter Permanentmagnet
- 7: Ummantelung
- 8: Drehachse
- 9: Verstellmittel
- 10: erste Endstellung
- 11: zweite Endstellung
- 12: Getriebe
- 13: Getriebeverzahnung
- 14: erster Verzahnungsträger
- 15: zweiter Verzahnungsträger
- 16: Verdrehachse
- 17: Federelement
- 18: Torsionsfeder
- 19: Anschlag
- 20: erster Rastsitz
- 21: zweiter Rastsitz
- 22: Rastnase
- 23: Führungsfase
- 24: Verstellhebel
- 25: Rückstellelement
- 26: Kippachse
- 27: Schaltelement
- 28: Schaltkugel
- 29: Kraftanzeige
- 30: Pfeil
- 31: Markierung
- 32: Verbindungsstift
- 33: Ausnehmung
- 34: Druckstück
- 35: Aussparung
- 36: Federaufnahme
- 37: Aufnahme

- α: Drehwinkel
- β: Verdrehwinkel

## Patentansprüche

1. Magnetfuß (1) für eine Elektrowerkzeugmaschine, insbesondere für eine Magnetkernbohrmaschine, mit einem Grundkörper (2), in dem mindestens ein erster Permanentmagnet (3) aufgenommen ist, dessen Magnetkraft mit der Magnetkraft mindestens eines zweiten Permanentmagneten (6) zu einer resultierenden Haltekraft zusammenwirkt, wobei der mindestens eine zweite Permanentmagnet (6) um einen Drehwinkel (α) zwischen einer ersten Stellung, in der die resultierende Haltekraft des Magnetfußes (1) maximiert ist, und einer zweiten Stellung, in der die resultierende Haltekraft des Magnetfußes (1) minimiert ist, um eine Drehachse (8) drehbar in dem Grundkörper (2) gelagert ist sowie mit einem Verstellmittel (9) zum Drehen des zweiten Permanentmagneten (6) zwischen der ersten Stellung und der zweiten Stellung, wobei das Verstellmittel (9) das um einen Verdrehwinkel (β) zwischen einer ersten Endstellung (10), in der sich der zweite Permanentmagnet (6) in der ersten Stellung befindet, und einer zweiten Endstellung (11), in der sich der zweite Permanentmagnet (6) in der zweiten Stellung befindet, um eine Verdrehachse (16) verdrehbar gelagert ist, wobei zwischen dem Verstellmittel (9) und dem zweiten Permanentmagneten (6) ein Getriebe (12) vorgesehen ist, dass derartig ausgelegt ist, dass das Verhältnis zwischen dem Verdrehwinkel (β) des Verstellmittels (9) und dem Drehwinkel (α) des zweiten Permanentmagneten (6) zwischen 1:3,6 und 1:1,5 und besonders bevorzugt bei 1:2,4 liegt, und wobei der Verdrehwinkel (β) zwischen der ersten Endstellung (10) und der zweiten Endstellung (11) zwischen 50° und 120° liegt und besonders bevorzugt 70° beträgt,
**dadurch gekennzeichnet, dass** der mindestens eine erste Permanentmagnet (3) mehrfach vorgesehen ist, und dass die Mehrzahl der ersten Permanentmagnete (3) in eine erste Teilgruppe (4) und in eine zweite Teilgruppe (5) zusammengefasst sind, die jeweils räumlich voneinander getrennt in dem Grundkörper (2) aufgenommen sind, derart, dass die Pole der beiden Teilgruppen (4, 5) spiegelbildlich zueinander angeordnet sind.

2. Magnetfuß (1) nach Anspruch 1, **dadurch gekennzeichnet, dass** das Getriebe (12) eine Getriebeverzahnung (13) aufweist, deren Übersetzungsverhältnis konstant ist und besonders bevorzugt aus einem ersten Verzahnungsträger (14) und aus einem zweiten Verzahnungsträger (15) gebildet ist.

3. Magnetfuß (1) nach Anspruch 2, **dadurch gekennzeichnet, dass** der erste Verzahnungsträger (14), der drehfest mit dem Verstellmittel (9) verbunden ist, als ein Kreissegment gebildet ist, dessen Winkel im Wesentlichen dem Winkel zwischen der ersten Endstellung (10) und der zweiten Endstellung (11) des Verdrehwinkels (β) entspricht und/oder der zweite Verzahnungsträger (15) kreisförmig gebildet ist.

4. Magnetfuß (1) nach Anspruch 2 oder 3, **dadurch gekennzeichnet, dass** die Anzahl der Zähne des zweiten Verzahnungsträgers (15) zwischen 4 und 8 liegt und besonders bevorzugt 5 beträgt.

5. Magnetfuß (1) nach einem der Ansprüche 1 bis 4, **dadurch gekennzeichnet, dass** zwischen dem Getriebe (12) und dem Grundkörper (2) ein den zweiten Permanentmagnet (6) in die erste Stellung vorspannendes Federelement (17) angeordnet ist, wobei das Federelement (17) bevorzugt als eine Torsionsfeder (18) gebildet ist.

6. Magnetfuß (1) nach einem der Ansprüche 1 bis 5, **dadurch gekennzeichnet, dass** dem Grundkörper (2) Anschläge (19) zugeordnet sind zur Begrenzung der Verdrehung des Verstellmittels (9), wobei die Anschläge (19) bevorzugt unmittelbar die Verstellung des Getriebes (12) begrenzen und wobei die Anschläge (19) besonders bevorzugt im Inneren des Grundkörpers (2) ausgebildet sind und die Verstellung des ersten Verzahnungsträgers (14) begrenzen.

7. Magnetfuß (1) nach einem der Ansprüche 1 bis 6, **dadurch gekennzeichnet, dass** die Lage des Verstellmittels (9) in der ersten Endstellung (10) und/oder in der zweiten Endstellung (11) durch eine Rastverbindung zwischen dem Grundkörper (2) und dem Verstellmittel (9) festlegbar ist, wobei vorzugsweise in dem Grundkörper (2) mindestens ein erster Rastsitz (20) ausgebildet ist, der die erste Endstellung (10) des Verstellmittels (9) definiert.

8. Magnetfuß (1) nach Anspruch 7, **dadurch gekennzeichnet, dass** an dem Verstellmittel (9) eine Rastnase (22) ausgebildet ist, die mindestens eine Führungsfase (23) aufweist, und dass das Verstellmittel (9) bevorzugt als ein Verstellhebel (24) gebildet ist, wobei der Verstellhebel (24) besonders bevorzugt gegen die Kraft eines Rückstellelements (25) um eine Kippachse (26) verschwenkbar ist, die senkrecht zu dessen Verdrehachse (16) orientiert ist.

9. Magnetfuß (1) nach einem der Anspruch 7 oder 8, **dadurch gekennzeichnet, dass** zwischen der ersten Endstellung (10) und der zweiten Endstellung (11) ein zweiter Rastsitz (21) ausgebildet ist, der eine Zwischenstellung definiert, in der die resultierende Haltekraft zwischen der minimalen Haltekraft und der maximalen Haltekraft liegt.

10. Magnetfuß (1) nach einem der Ansprüche 1 bis 9, **dadurch gekennzeichnet, dass** auf der dem Verstellmittel (9) abgewandten Stirnseite des Grundkörpers (2) eine Kraftanzeige (29) angeordnet ist, die ein Ablesen der resultierenden Haltekraft ermöglicht, wobei die Kraftanzeige (29) bevorzugt drehfest mit dem zweiten Permanentmagneten (6) verbunden ist.

11. Magnetfuß (1) nach einem der Ansprüche 1 bis 10, **dadurch gekennzeichnet, dass** der zweite Permanentmagnet (6) eingebettet ist in eine im Wesentlichen zylindrische Ummantelung (7), die in dem Grundkörper (2) drehbar aufgenommen ist, wobei dem zweiten Permanentmagneten (6) bevorzugt ein Schaltelement (27) zugeordnet ist zum Schalten eines mit dem Magnetfuß (1) verbindbaren Schalters, wobei das Schaltelement (27) besonders bevorzugt als eine in der Ummantelung (7) eingebettete Schaltkugel (28) gebildet ist.

12. Magnetfuß (1) nach einem der Ansprüche 1 bis 11, **dadurch gekennzeichnet, dass** ein federndes Druckstück (34) in dem Grundkörper (2) aufgenommen ist, das in der ersten Endstellung (10) und/oder der zweiten Endstellung (11) des Verstellmittels (9) in eine am Getriebe (12) ausgebildete Aussparung (35) einrückbar ist.

13. Elektrowerkzeugmaschine, insbesondere Magnetkernbohrmaschine, mit einem Magnetfuß (1) nach einem der Ansprüche 1 bis 12.

## Claims

1. Magnetic base (1) for a power tool, in particular for a magnetic core drilling machine, comprising a base body (2) in which at least one first permanent magnet (3) is accommodated, the magnetic force of which interacts with the magnetic force of at least one second permanent magnet (6) to form a resultant holding force, the at least one second permanent magnet (6) being rotatable about an angle of rotation (α) between a first position in which the resultant holding force of the magnetic base (1) is maximized and a second position in which the resultant holding force of the magnetic base (1) is minimized, in which the resultant holding force of the magnetic base (1) is maximized, and a second position in which the resultant holding force of the magnetic base (1) is minimized, is mounted in the base body (2) so as to be rotatable about an axis of rotation (8), and with an adjusting means (9) for rotating the second permanent magnet (6) between the first position and the second position, wherein the adjusting means (9) rotates the second permanent magnet (6) about a rotation angle (β) between a first end position (10), in which the second permanent magnet (6) is located in the first position, and a second end position (11), in which the second permanent magnet (6) is located in the second position, is mounted so as to be rotatable about an axis of rotation (16), wherein a gear (12) is provided between the adjusting means (9) and the second permanent magnet (6), which gear is designed such that the ratio between the angle of rotation (β) of the adjusting means (9) and the angle of rotation (α) of the second permanent magnet (6) is between 1:3.6 and 1:1.5 and particularly preferably 1:2.4, and wherein the angle of rotation (β) between the first end position (10) and the second end position (11) is between 50° and 120° and particularly preferably 70°,
**characterized in that** the at least one first permanent magnet (3) is provided several times, and **in that** the plurality of first permanent magnets (3) are combined into a first subgroup (4) and into a second subgroup (5), which are each accommodated spatially separated from one another in the base body (2), such that the poles of the two subgroups (4, 5) are arranged as mirror images of one another.

2. Magnetic base (1) according to claim 1, **characterized in that** the gear (12) comprises a gear toothing (13) whose transmission ratio is constant and is particularly preferably formed from a first toothing carrier (14) and from a second toothing carrier (15).

3. Magnetic base (1) according to claim 2, **characterized in that** the first toothing carrier (14), which is connected to the adjusting means (9) in a rotationally fixed manner, is formed as a circular segment, the angle of which essentially corresponds to the angle between the first end position (10) and the second end position (11) of the angle of rotation (β) and/or the second toothing carrier (15) is formed in a circular shape.

4. Magnetic base (1) according to claim 2 or 3, **characterized in that** the number of teeth of the second toothing carrier (15) is between 4 and 8 and is particularly preferably 5.

5. Magnetic base (1) according to one of claims 1 to 4, **characterized in that** a spring element (17) biasing the second permanent magnet (6) into the first position is arranged between the gear (12) and the base body (2), the spring element (17) preferably being formed as a torsion spring (18).

6. Magnetic base (1) according to one of claims 1 to 5, **characterized in that** stops (19) are assigned to the base body (2) for limiting the rotation of the adjusting means (9), the stops (19) preferably directly limiting the adjustment of the gear (12), and the stops (19) being particularly preferably formed in the interior of the base body (2) and limiting the adjustment of the first toothing carrier (14).

7. Magnetic base (1) according to one of claims 1 to 6, **characterized in that** the position of the adjusting means (9) in the first end position (10) and/or in the second end position (11) can be fixed by a latching connection between the base body (2) and the adjusting means (9), preferably at least one first latching seat (20) being formed in the base body (2), which defines the first end position (10) of the adjusting means (9).

8. Magnetic base (1) according to claim 7, **characterized in that** a latching lug (22) is formed on the adjusting means (9), which comprises at least one guide chamfer (23), and **in that** the adjusting means (9) is preferably formed as an adjusting lever (24), the adjusting lever (24) being particularly preferably pivotable against the force of a resetting element (25) about a tilting axis (26), which is oriented perpendicular to its axis of rotation (16).

9. Magnetic base (1) according to one of claims 7 or 8, **characterized in that** a second latching seat (21) is formed between the first end position (10) and the second end position (11), which defines an intermediate position in which the resulting holding force lies between the minimum holding force and the maximum holding force.

10. Magnetic base (1) according to one of claims 1 to 9, **characterized in that** a force indicator (29) is arranged on the end face of the base body (2) facing away from the adjusting means (9), wherein the force indicator (29) enables the resulting holding force to be read off, the force indicator (29) preferably being connected to the second permanent magnet (6) in a rotationally fixed manner.

11. Magnetic base (1) according to one of claims 1 to 10, **characterized in that** the second permanent magnet (6) is embedded in a substantially cylindrical sheath (7) which is rotatably received in the base body (2), the second permanent magnet (6) preferably being assigned a switching element (27) for switching a switch which can be connected to the magnetic base (1), the switching element (27) being formed particularly preferably as a switching ball (28) embedded in the cylindrical sheath (7).

12. Magnetic base (1) according to one of claims 1 to 11, **characterized in that** a resilient pressure piece (34) is accommodated in the base body (2), which can be engaged in a recess (35) formed on the gear (12) in the first end position (10) and/or the second end position (11) of the adjusting means (9).

13. Power tool, in particular magnetic core drilling machine, with a magnetic base (1) according to one of claims 1 to 12.

## Revendications

1. Pied magnétique (1) pour une machine-outil électrique, en particulier pour une machine de carottage magnétique, avec un corps de base (2), dans lequel est logé au moins un premier aimant permanent (3) dont la force magnétique coopère avec la force magnétique d'au moins un deuxième aimant permanent (6) pour une force de maintien en résultant, dans lequel l'au moins un deuxième aimant permanent (6) est monté dans le corps de base (2) de manière à pouvoir tourner autour d'un axe de rotation (8) selon un angle de rotation (a) entre une première position, dans laquelle la force de maintien en résultant du pied magnétique (1) est maximisée, et une deuxième position, dans laquelle la force de maintien en résultant du pied magnétique (1) est minimisée, ainsi qu'avec un moyen d'ajustement (9) destiné à faire tourner le deuxième aimant permanent (6) entre la première position et la deuxième position, dans lequel le moyen d'ajustement (9) est monté de manière à pourvoir être tordu autour d'un axe de torsion (16) selon un angle de torsion (β) entre une première position finale (10), dans laquelle le deuxième aimant permanent (6) se trouve dans la première position, et une deuxième position finale (11), dans laquelle le deuxième aimant permanent (6) se trouve dans la deuxième position, dans lequel un engrenage (12) est prévu entre le moyen d'ajustement (9) et le deuxième aimant permanent (6), lequel est conçu de telle manière que le rapport entre l'angle de torsion (β) du moyen d'ajustement (9) et l'angle de rotation (α) du deuxième aimant permanent (6) soit compris entre 1:3,6 et 1:1,5 et de manière particulièrement préférée soit de l'ordre de 1:2,4, et dans lequel l'angle de torsion (β) entre la première position finale (10) et la deuxième position finale (11) se situe entre 50° et 120° et est de manière particulièrement préférée de 70°, **caractérisé en ce que** l'au moins un premier aimant permanent (3) est prévu plusieurs fois, et que la multitude des premiers aimants permanents (3) sont regroupés en un premier sous-groupe (4) et en un deuxième sous-groupe (5), qui sont chacun séparés spatialement l'un de l'autre dans le corps de base (2), de telle manière que les pôles des deux sous-groupes (4, 5) sont disposés de manière inversée l'un par rapport à l'autre.

2. Pied magnétique (1) selon la revendication 1, **caractérisé en ce que** l'engrenage (12) présente une denture d'engrenage (13), dont le rapport de démultiplication est constant et qui est formée de manière particulièrement préférée d'un premier support de denture (14) et d'un deuxième support de denture (15).

3. Pied magnétique (1) selon la revendication 2, **caractérisé en ce que** le premier support de denture (14), qui est relié de manière solidaire en rotation au moyen d'ajustement (9), est formé en tant qu'un segment circulaire, dont l'angle correspond sensiblement à l'angle entre la première position finale (10) et la deuxième position finale (11) de l'angle de torsion (β) et/ou le deuxième support de denture (15) est formé de manière circulaire.

4. Pied magnétique (1) selon la revendication 2 ou 3, **caractérisé en ce que** le nombre des dents du deuxième support de denture (15) se situe entre 4 et 8 et est de manière particulièrement préférée de 5.

5. Pied magnétique (1) selon l'une quelconque des revendications 1 à 4, **caractérisé en ce qu'**un élément de ressort (17) précontraignant le deuxième aimant permanent (6) dans la première position est disposé entre l'engrenage (12) et le corps de base (2), dans lequel l'élément de ressort (17) est formé de manière préférée en tant qu'un ressort de torsion (18).

6. Pied magnétique (1) selon l'une quelconque des revendications 1 à 5, **caractérisé en ce que** des butées (19) sont associées au corps de base (2) pour limiter la torsion du moyen d'ajustement (9), dans lequel les butées (19) limitent de manière préférée immédiatement l'ajustement de l'engrenage (12) et dans lequel les butées (19) sont réalisées de manière particulièrement préférée à l'intérieur du corps de base (2) et limitent l'ajustement du premier support de denture (14).

7. Pied magnétique (1) selon l'une quelconque des revendications 1 à 6, **caractérisé en ce que** la position du moyen d'ajustement (9) dans la première position finale (10) et/ou dans la deuxième position finale (11) peut être fixée par une liaison d'encliquetage entre le corps de base (2) et le moyen d'ajustement (9), dans lequel au moins un premier siège d'encliquetage (20) est réalisé de préférence dans le corps de base (2), lequel définit la première position finale (10) du moyen d'ajustement (9).

8. Pied magnétique (1) selon la revendication 7, **caractérisé en ce qu'**est réalisé sur le moyen d'ajustement (9) un bec d'encliquetage (22), qui présente au moins un chanfrein de guidage (23), et que le moyen d'ajustement (9) est formé de manière préférée en tant qu'un levier d'ajustement (24), dans lequel le levier d'ajustement (24) peut être pivoté de manière particulièrement préférée à l'encontre de la force d'un élément de rappel (25) autour d'un axe de basculement (26), qui est orienté de manière perpendiculaire par rapport à son axe de torsion (16).

9. Pied magnétique (1) selon l'une quelconque des revendications 7 ou 8, **caractérisé en ce qu'**entre la première position finale (10) et la
deuxième position finale (11), un deuxième siège d'encliquetage (21) est formé, qui définit une position intermédiaire, dans laquelle la force de maintien en résultant se situe entre la force de maintien minimale et la force de maintien maximale.

10. Pied magnétique (1) selon l'une quelconque des revendications 1 à 9, **caractérisé en ce qu'**est disposé sur la face frontale du corps de base (2) opposée au moyen d'ajustement (9) un indicateur de force (29), qui permet de lire la force de maintien en résultant, dans lequel l'indicateur de force (29) est relié de manière préférée de manière solidaire en rotation au deuxième aimant permanent (6).

11. Pied magnétique (1) selon l'une quelconque des revendications 1 à 10, **caractérisé en ce que** le deuxième aimant permanent (6) est encastré dans une gaine sensiblement cylindrique (7), qui est logée de manière à pouvoir tourner dans le corps de base (2), dans lequel est associé au deuxième aimant permanent (6) de manière préférée un élément de commutation (27) pour la commutation d'un commutateur pouvant être relié au pied magnétique (1) , dans lequel l'élément de commutation (27) est formé de manière particulièrement préférée en tant qu'une bille de commutation (28) encastrée dans la gaine (7).

12. Pied magnétique (1) selon l'une quelconque des revendications 1 à 11, **caractérisé en ce qu'**une pièce de pression à ressort (34) est logée dans le corps de base (2), laquelle peut être engagée, dans la première position finale (10) et/ou la deuxième position finale (11) du moyen d'ajustement (9), dans un évidement (35) réalisé sur l'engrenage (12).

13. Machine-outil électrique, en particulier machine de carottage magnétique, avec un pied magnétique (1) selon l'une quelconque des revendications 1 à 12.
